# EUROPEAN PATENT APPLICATION

(11) **EP 2 448 283 A2**
(43) Date of publication of application: **02.05.2012**
(21) Application number: 11186601.8
(22) Date of filing: 26.10.2011
(51) Int. Cl.: H04N 13/04

(54) **Adaptation system for 3D display with user tracking**

(30) Priority: 26.10.2010 EP 10188868
(71) Applicant: Sony Corporation, Tokyo 108-0075 (JP)
(72) Inventor: Wirtz, René, 70199 Stuttgart (DE)
(74) Representative: Witte, Weller & Partner

(57) **Abstract**

The present invention relates to an 3D motion picture adaption system (1) comprising a 3D motion picture device (10, 11) for displaying 3D motion pictures (13, 14), a sensor device (40) for detecting the position of the viewer's eyes; and an adaption device (50, 56, 60) for adapting the position of the displayed 3D motion pictures (13, 14) to the detected position of the 3D glasses (20, 21).

## Description

### FIELD OF INVENTION

The present invention relates to a 3D motion picture adaption system comprising a 3D motion picture device for displaying 3D motion pictures. The invention also relates to a mounting device for a 3D motion picture device comprising a first frame adapted to be connectable to the motion picture device, a second frame adapted to rotatably support the first frame and a motor for rotating the first frame relative to the second frame. Moreover, the invention relates to 3D glasses for a 3D motion picture device and a method for adapting 3D motion pictures displayed by a 3D motion picture device.

### BACKGROUND OF THE INVENTION

Stereoscopic (so called 3D) motion picture systems become more and more popular, not only in movie theatres but also and increasingly in the private or home environment using special TV sets or beamers capable of displaying stereoscopic motion pictures. For enjoying the stereoscopic effect, generally the users have to wear special glasses, preferably so called shutter glasses or polarization glasses or have to use so called glasses-less TV sets, e.g. based on the parallax-barrier technique. Shutter glasses allow to offer the right picture only to the right eye and the left picture of the stereoscopic motion pictures to the left eye only. Both pictures are then superimposed by the user's brain to build a three dimensional picture or image. To do this correctly, the two different pictures have to reflect the real position of the eyes. That means that if the eyes are positioned in parallel to the horizon the left eye should get an image that was taken from a position more to the left hand side and the right eye should see an image that was taken from a position more to right hand side of the center.

Presently, the whole system for viewing stereoscopic motion pictures, regardless whether using glasses-less systems or systems with shutter-glasses, requires that the user keeps his head as upright as possible to achieve the desired 3D impression. However, as soon as the user tilts his head to the left or the right (relative to the TV set for example) the 3D impression gets worse, particularly the 3D picture becomes blurred which is very awkward for the user.

### SUMMARY OF INVENTION

It is an object of the present invention to provide a 3D motion picture adaption system which allows to overcome the disadvantages mentioned above. In particular the system should be able to avoid blurred pictures when the user tilts his head.

This object is solved by the aforementioned 3D motion picture adaption system in that a sensor device for detecting the position of the eyes of the viewer, and an adaption device for adapting the position of the displayed 3D motion pictures to the detected position of the 3D glasses are provided.

Preferably the sensor device is adapted to detect the position of 3D glasses as to indirectly detect the position of the viewer's eyes in cases where a system with 3D glasses is used.

Here, it is to be noted that "detecting the position of the eyes of the viewer" generally comprises any approach to determine the eye's position whether directly or indirectly e.g. by detecting the position of the viewer's glasses.

That means in other words that the position of the viewer's eyes or viewer's 3D glasses relative to a horizontal line (corresponding to the tilt angle of the viewer's head wearing the glasses and hence the position of the viewer's eyes) is determined and then used to adapt the motion pictures displayed on the 3D motion picture device. The result of the adaption is that the user or viewer with a tilted head has the same unblurred stereoscopic impression as in an upright position. In other words, the user wearing the 3D glasses or not (when a glasses-less system is used) can lay on a sofa and the system is able to adapt the displayed 3D motion pictures such that an assumed horizontal line in the displayed 3D motion pictures corresponds to a line passing through the centers of the glasses.

One of the advantages of this inventive system is that the motion picture quality experienced by the user is kept high also when the user tilts his head to the left or the right.

A further advantage of the inventive system is that it may be readily implemented even in existing systems.

In a preferred embodiment, said sensor device comprises a position sensor element mounted to the 3D glasses and a transmitter element for transmitting a position signal to the 3D motion picture device. More preferably, said sensor device is provided as a single unit connectable to the 3D glasses.

That means in other words that the 3D glasses hold the position sensor and a transmitter element, preferably an infrared LED, for transmitting the position signals to the motion picture device. The position sensor element is for example designed to detect the tilt angle of the 3D glasses relative to a horizontal axis. It is, however, to be noted that other sensor elements are also conceivable, for example sensors for detecting an acceleration.

These types of position sensor elements may be considered as active elements mounted to the glasses and adapted to transmit a position signal to the motion picture device.

In contrast thereto it is also possible to design a passive position sensor system meaning that the position detection is carried out by the motion picture device and the 3D glasses have only passive elements, for example light reflecting elements, which could be used for optically detecting the orientation of the glasses relative to a horizontal axis.

In a further preferred embodiment, said 3D glasses are provided as 3D shutter glasses having electronic circuitry for receiving and processing synchronization signals from the 3D motion picture device, and said sensor device is integrated into the electronic circuitry.

The most common 3D glasses for viewing 3D motion pictures are the so called 3D shutter glasses. Since the function of such 3D shutter glasses is known in the art, it is refrained from repeating it in detail hereinafter. Typically, the known 3D shutter glasses have at least optical receiving elements for receiving a synchronization signal. Due to this structure, it is readily possible to integrate also optical transmitters to transmit position signals back to the motion picture device. Hence, the implementation of a sensor device is easy and not very cost intensive.

In a further embodiment, said adaption device comprises a delay element adapted to change the responsivity of the adaption process.

That means in other words that the user can select how fast the system adapts the 3D motion picture device to the position of the 3D glasses. For example it is not necessary and not desired to follow short movements of the user's head. In other words the system has a certain, preferably selectable reaction time to adapt the position of the displayed 3D motion pictures to the detected position of the 3D glasses.

In a further preferred embodiment, said adaption device comprises a motor for rotating the 3D motion picture device. Preferably, said adaption device comprises a first frame mountable to the 3D motion picture device and a second frame rotatably supporting the first frame, and said second frame is adapted to be mountable to a wall or a foot.

That means in other words that the whole 3D motion picture device is rotated to follow the movement of the user's head. Hence, if the user moves from a standing upright position into a horizontal position, the motor, preferably an electric motor, rotates the motion picture device from the horizontal position into a vertical position so that a horizontal line in a displayed scene on the motion picture device is parallel to an axis passing through the centers of the 3D glasses.

The advantage of this approach is that it may be easily implemented even in existing systems. It is only necessary to replace an existing frame with a motor driven frame.

As an alternative, it is also conceivable to provide an image processor which allows to rotate the 3D motion pictures displayed by the 3D motion picture device. More preferably, said image processor is adapted to change the format of the motion pictures.

That is in other words that the motion picture device itself is kept in the same position and the displayed motion pictures are rotated electronically by image processing algorithms.

In a preferred embodiment, the system is adapted to handle more than one 3D glasses independently. That means that one user sees the motion pictures in a position corresponding to his 3D glasses and a further user sees the same motion pictures in a different position corresponding to the position of his 3D glasses. Such a multi user system is possible by sequentially displaying the pictures for the left and right eyes first to the first user and then to the second user. To avoid that the first user sees pictures destined for the second user, the 3D shutter glasses of the first user are closed, and vice versa.

In a preferred embodiment, said image processor is adapted to display the motion pictures for the first and second shutter glasses in an interleaved way.

In the context of the present application, interleaves means that the system displays the left picture for the first user, then the left picture for the second user, then the right picture for the first user and then the right picture for the second user, and so on.

Said 3D motion picture device is preferably a TV set or for example a beamer or a computer device.

Preferably, the 3D motion picture device is a glasses-less TV set, particular a parallax-barrier type TV set. Parallax-barrier is a device to allow a liquid crystal display to present a stereoscopic image without the need for the viewer to wear 3D glasses. Placed in front of the normal LCD, it consists of a layer of material with series of precision slits, allowing each eye to see a different set of pixels so creating a sense of depth through parallax. The advantage of this type of TV set is that the viewer has no need to wear glasses.

In order to detect the position of the viewer's eyes, the sensor device may comprise a face recognition unit for detecting the position of the eyes directly. However, it is also conceivable to detect the position indirectly, e.g. by using glasses with a position sensor element or by e.g. a position sensor element placed on the viewer's head.

In a preferred embodiment, said sensor device comprises a position sensor element adapted to detect a 3D acceleration of the 3D glasses and a calculating element adapted to calculate the position of the 3D glasses on the basis of the detected acceleration.

The object of the present invention is also solved by a mounting device for a 3D motion picture device comprising a first frame adapted to be connectable to the motion picture device, a second frame adapted to rotatably support the first frame and a motor for rotating the first frame relative to the second frame and a controller adapted to receive a position signal from 3D glasses and to drive the motor in response to the received position signal.

Such an inventive mounting device allows to equip existing systems very easily with the capability to adapt the position of the displayed 3D motion pictures to the detected position of 3D glasses.

The object of the present invention is also solved by 3D glasses for a 3D motion picture device comprising a sensor device for detecting the position of the glasses. Preferably, the sensor device is adapted to detect the position of an axis passing the centers of the glasses relative to the horizontal axis.

The object of the present invention is also solved by a method for adapting a 3D motion picture displayed by a 3D motion picture device and watched by a viewer, comprising the steps:
detecting the position of the eyes of the viewer or the position of 3D glasses worn by the viewer, and
adapting the position of the 3D motion pictures in response to the detected position.

The advantages are the same as set forth with respect to the 3D motion picture adaption system so that it is not necessary to repeat them again.

The method preferably comprises the step of transmitting the detected position to the 3D motion picture device. Preferably, the step of adapting comprises the step of rotating the 3D motion picture device. Additionally or alternatively, the step of adapting comprises the step of rotating the 3D motion pictures.

More preferably, the adapting step comprises the step of reformatting the 3D motion pictures to match the size of the motion picture device.

Further features and advantages can be taken from the following description and the enclosed drawings.

It is to be understood that the embodiments and/or features mentioned above and those yet to be explained below can be used not only in the respective combinations indicated, but also in other combinations or in isolation, without leaving the scope of the present invention. That is in other words that for example features listed in a dependent claim can also be used in isolation without the other features.

The present invention is based on the idea to rotate the motion picture device and/or the displayed motion picture itself as to follow a tilting movement of the user's head.

### BRIEF DESCRIPTION OF DRAWINGS

The present invention will be apparent from and explained in more detail below with reference to the embodiments described hereinafter. In the following drawings
- Fig. 1: shows a schematic diagram of an adaption system according to the present invention;
- Fig. 2: shows a schematic diagram of the system of fig. 1 in an adapted position;
- Fig. 3: shows a schematic diagram of a further embodiment of the inventive system;
- Fig. 4: shows a schematic diagram of a multi user system;
- Fig. 5: shows a schematic block diagram of a sensor device and an adaption device; and
- Fig. 6: shows a schematic diagram of a motor driven mounting device for a motion picture device.

### DESCRIPTION OF PREFERRED EMBODIMENTS

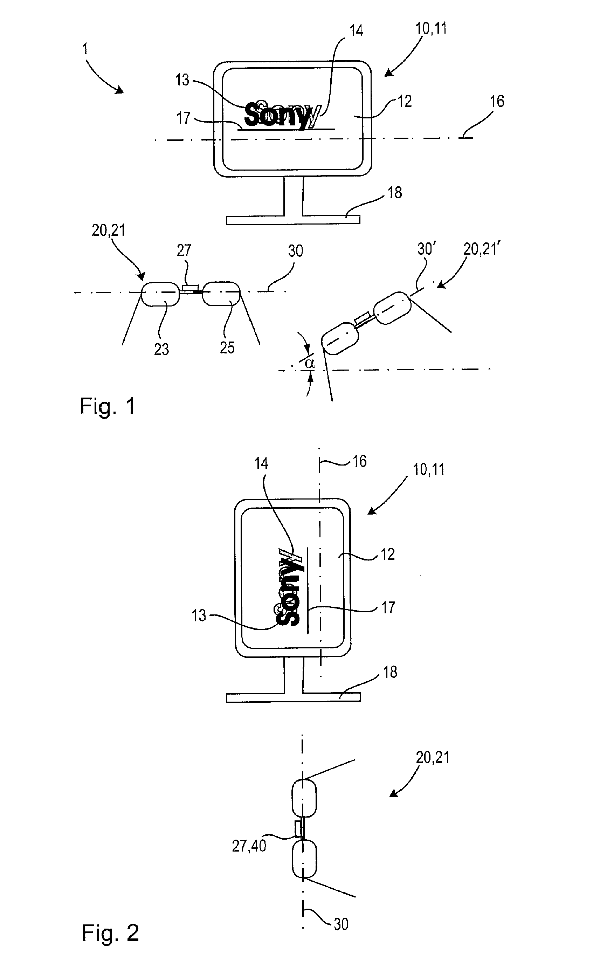

In fig. 1, a 3D motion picture adaption system is schematically shown and indicated with reference numeral 1. The system 1 generally comprises a 3D motion picture device 10, preferably a TV set 11, and at least one pair of 3D glasses 20, preferably so called 3D shutter glasses 21. This system 1 allows a user to see motion pictures on a screen 12 of the TV set 11 with a stereoscopic or 3D impression.

As it is known in the art such a 3D impression is achieved by presenting a left picture 13 to the left eye and a right picture 14 to the right eye of the user who then superimposes those pictures to one 3D image. Shutter glasses 21 are equipped with special glasses 23, 25 being able to be "opened" and "closed" electrically. "Closed" means that the glass is opaque and "opened" means that the glass is transparent. As to alternately open and close the glasses, the shutter glasses also comprise a synchronization circuitry which is adapted to receive synchronization signals from the TV set 11. The synchronization signal contains the information which of the glasses has to be closed or opened.

The motion pictures are produced under the premise that the TV set is horizontally oriented meaning that a horizontal line 17 displayed on the screen 12 is parallel to a horizontal line 6 in the environment of the TV set. Such a horizontal line is shown in fig. 1 and indicated with reference numeral 16.

The user wearing the shutter glasses 21 gets the best 3D impression only in an upright position meaning that a central axis 30 passing through both centers of the glasses 23, 25 is parallel to the horizontal line 17. In other words, the shutter glasses 21 should also be in a horizontal orientation.

As soon as the user tilts his head to the left or the right hand side the orientation changes with the result that the 3D image becomes blurred. In fig. 1, shutter glasses 21' are shown in a tilted position where the central axis 30' is in an angular relation to the horizontal line. In fig. 1, this angle is indicated with α.

The present system 1 now allows to react on a tilted orientation of shutter glasses 21 so that the user still has an unblurred image.

According to one embodiment which is shown in fig. 2, this is achieved by rotating the TV set 11 or alternatively only the screen 12 in response to a tilting movement of the shutter glasses 21.

In fig. 2, the shutter glasses 21 are shown in a orientation rotated or tilted 90° relative to a horizontal line 16. Hence, the central axis 30 is perpendicular to the horizontal line.

As it is also apparent from fig. 2, at least the screen 12 of the TV set 11 has been rotated by the same angular value, namely 90° so that a horizontal line 17 displayed in the motion pictures is parallel to the central axis 30. As a result, the 3D motion pictures displayed on the screen 12 have been adapted to the position or orientation of the shutter glasses 21.

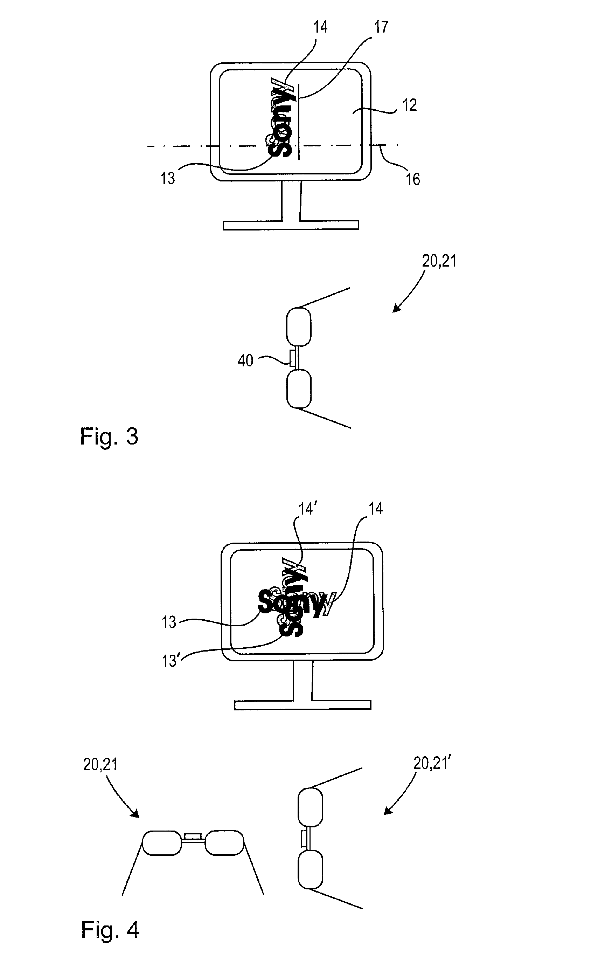

In fig. 3, an alternative approach is schematically shown. The adaption process now comprises the rotation of the motion pictures themselves meaning that the TV set 11 or the screen 12 are kept in position. The rotation of the motion pictures requires image processing which may be readily implemented. Due to the fact that typical TV sets have square screens, the motion pictures should also be reformatted so that also the side portions of the images can be displayed. Otherwise without reformatting side portions of the motion pictures could be cut off.

This alternative approach would perfectly work with a screen 12 having a round or quadratic shape.

Although this approach is described as an alternative to that shown in fig. 2, it is conceivable to combine both approaches meaning that the TV set 11 is rotated and in addition the motion pictures are also rotated by image processing.

For adapting the 3D motion pictures to the orientation or position of the shutter glasses 21, it is necessary that the 3D motion picture device 10 has respective information about the position of the shutter glasses.

One approach to deliver this information is to equip the shutter glasses 21 with a sensor device adapted to detect the position of the shutter glasses. In fig. 2 or 3, the sensor device is indicated with reference numeral 40.

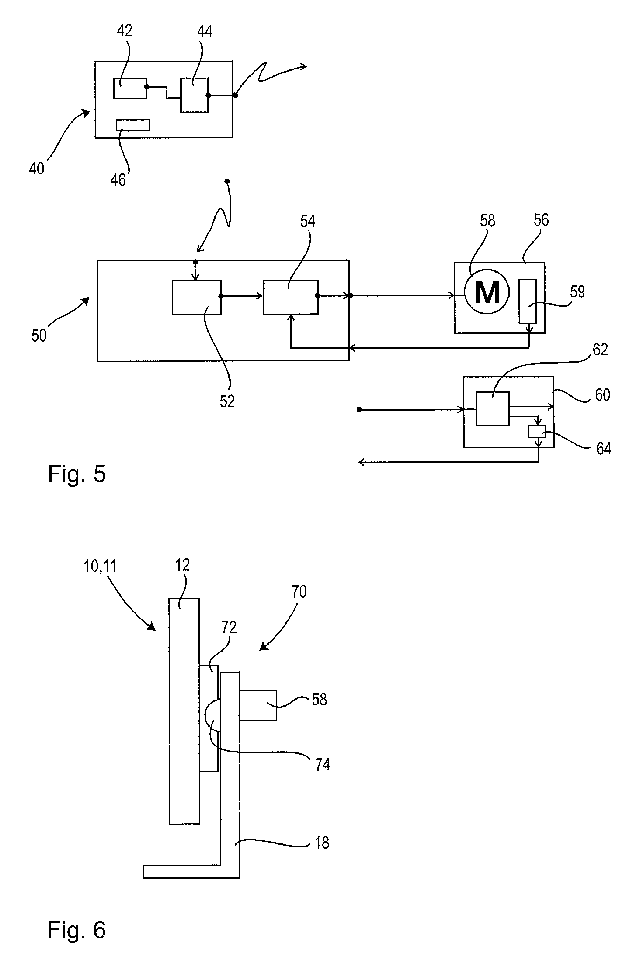

As it shown in fig. 5 in a schematic way, the sensor device 40 comprises a position sensor 42 and a transmitting element 44 as well as a battery 46. The position sensor 42 is able to provide a value corresponding to the angle α between the central axis 30 and a horizontal line 16. Gyroscopes or acceleration sensors are examples for such a position sensor. However, it is to be noted that other sensors are also conceivable as long as they provide the required information.

A transmitting element 44, for example an infrared LED, is used to transmit this position or information to the a respective receiver at the TV set 11.

The sensor device 14 may be integrated in the synchronization circuitry 37 of the shutter glasses, or can be also provided as a single independent unit which may be fixed to the shutter glasses 21.

As already mentioned before, the positional information is received by the TV set, for example by a receiver element 52 which is part of an adaption device 50.

The received information is provided to a controller 54 which processes the information and generates respective signals to drive a motor 58 in order to rotate the screen 12.

The motor 58 is part of a driving unit 56 which also comprises a feedback element 59 adapted to provide the controller with positional information about the motor 58. The controller is then able to check whether the motor 58 has rotated the screen into the desired position.

In order to avoid fast movements of the screen 12, the controller 54 is adapted to follow positional changes of the shutter glasses 21 slowly or delayed. Hence, short movements of the shutter glasses 21 do not result in respective movements of the screen 12.

In the alternative approach, the driving unit 56 is replaced with an image processor unit 60 which comprises an image processor 62 and also a feedback unit 64. The image processor 62 is adapted to rotate the motion pictures by an angle corresponding to the positional information from the sensor device 40. Preferably, the image processor 62 is part of the electronic circuitry of the TV set 11.

To briefly sum up, there are generally two approaches to adapt the motion pictures to the position or orientation of the shutter glasses, namely a mechanical approach and an electronic approach. As already mentioned before, it is also conceivable to combine these approaches.

The electronic approach described above also allows a multi user system which is schematically shown in fig. 4. In this example, two users and hence two shutter glasses 21 and 21' are present and used to watch 3D motion pictures 13, 14.

In the event that the orientation of both shutter glasses 21 and 21' is the same, the adaption of the motion pictures follows the same line as described with respect to fig. 3, for example.

However, if the orientation of both shutter glasses 21 and 21' is different, as shown in fig. 4, the adaption of the motion pictures is still possible but in a different way.

The main idea of handling such a situation is to present the motion pictures to the users separately. In other words, the first user with the shutter glasses 21 sees a picture while the shutter glasses of the second user are closed so that the second user does not see the picture designed for the first user, and vice versa.

This allows to process the motion pictures for the first user differently to the motion pictures of the second user. It is hence possible to keep for example the motion pictures for the first user in the original position whereas the motion pictures for the second user are rotated by for example 90°, as shown in fig. 4.

A preferred order of presenting the pictures to the users is for example: left picture 13 for the first user, left picture 13' for the second user, right picture 14 for the first user and right picture 14' for the second user.

It is to be noted that such a multi user system is only possible with the electronic approach.

In fig. 6, an example of a motor driven mounting device for the mechanical approach is shown.

The motor driven mounting device is indicated with reference numeral 70 and comprises a first frame 72 and a second frame which forms foot 18 of the TV set 11. The first frame 72 is mounted to the backside of the TV set 11 and is rotatably supported by the foot 18. The connection between the first frame 72 and the foot 18 may be provided by a ball and socket joint 74.

The motor driven mounting device 17 also comprises the motor 58 which is mounted at the foot 18. The motor 58 is adapted to rotate the first frame 72 around an axis which is perpendicular to the screen 12.

The above mentioned embodiments relate to systems which require 3D glasses. However, the invention also relates to systems which do not require 3D glasses, for example parallax barrier TV sets. The techniques for detecting the position of the 3D glasses are also applicable for detecting the position of the viewer's eyes. Hence all features mentioned above are combinable with these glasses-less systems. However, rotating the motion picture alone without rotating the parallax barrier in front of the TV is not possible.

The invention has been illustrated and described in detail in the drawings and foregoing description, but such illustration and description are to be considered illustrative or exemplary and not restrictive. The invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. 3D motion picture adaption system comprising
a 3D motion picture device (10) for displaying 3D motion pictures;
**characterized by**
a sensor device (40) for detecting the position of the eyes of a viewer; and
an adaption device (50) for adapting the position of the displayed 3D motion pictures to the detected position of the viewer's eyes.

2. Adaption system of claim 1, comprising 3D glasses (20, 21), wherein said sensor device is adapted to detect the position of the 3D glasses.

3. Adaption system of claim 2, wherein said sensor device (40) comprises a position sensor element (42) mounted to the 3D glasses and a transmitter element (44) for transmitting a position signal to the 3D motion picture device.

4. Adaption system of claim 3, wherein said sensor device (40) is provided as a single unit connectable to the 3D glasses.

5. Adaption system of any of claims 1 to 4 wherein said adaption device (50) comprises a motor (58) for rotating the 3D motion picture device.

6. Adaption system of any of claims 2 to 5, wherein said adaption device (50) comprises an image processor (62) adapted to rotate the 3D motion pictures displayed by the 3D motion picture device.

7. Adaption system of claim 6, comprising at least first and second 3D shutter glasses, and said image processor (62) is adapted to display the motion pictures for the first 3D shutter glasses considering the respective position of the first 3D shutter glasses and to display the motion pictures for the second 3D shutter glasses considering the respective position of the second 3D shutter glasses, wherein the first shutter glasses are closed when displaying the motion pictures for the second shutter glasses and the second shutter glasses are closed when displaying the motion pictures for the first shutter glasses.

8. Adaption system of claim 1, wherein said 3D motion picture device (10) is a glasses-less TV set, particularly a parallax-barrier type TV set.

9. Adaption system of claim 8, wherein said sensor device (40) comprises a face recognition unit for detecting the position of the viewer's eyes.

10. Adaption system of claim 8, wherein said sensor device (40) comprises a position sensor element (42) adapted to be wearable by the viewer and to detect the position of the viewer's head

11. Adaption system of any of claims 2 to 7, wherein said sensor device (40) comprises a position sensor element adapted to detect the horizontal orientation of the 3D glasses.

12. Mounting device for a 3D motion picture device comprising a first frame (72) adapted to be connectable to the motion picture device (10), a second frame (18) adapted to rotatably support the first frame, and a motor (58) for rotating the first frame relative to the second frame, **characterized by** a controller adapted to receive a position signal from 3D glasses and to drive the motor in response to the received position signal.

13. 3D glasses for a 3D motion picture device comprising a sensor device (40) for detecting the position of the glasses.

14. 3D glasses of claim 13, wherein the sensor device (40) is adapted to detect the position of an axis passing the centres of the glasses relative to the horizontal axis.

15. Method for adapting 3D motion pictures displayed by a 3D motion picture device and watched by a viewer, comprising the steps:
detecting the position of the viewer's eyes or the position of 3D glasses worn by the viewer, and
adapting the position of the 3D motion pictures in response to the detected position of the viewer's eyes or the 3D glasses.
